# EUROPÄISCHE PATENTANMELDUNG

(11) **EP 3 839 794 A1**
(43) Veröffentlichungstag der Anmeldung: **23.06.2021**
(21) Anmeldenummer: 19218643.5
(22) Anmeldetag: 20.12.2019
(51) Int. Cl.: G06F 30/15, G06F 30/17, G06F 119/20, G06F 111/04, G06F 111/20

(54) **VERFAHREN UND SYSTEM ZUR EVALUIERUNG EINER VERWENDBARKEIT EINES NEUEN BASISELEMENTS**

(71) Anmelder: Airbus Operations GmbH, 21129 Hamburg (DE)
(72) Erfinder: Gonnsen, Johannes, 21129 Hamburg (DE)
(74) Vertreter: Bird & Bird LLP

(57) **Zusammenfassung**

Dargestellt und beansprucht ist ein Verfahren zur Evaluierung einer Verwendbarkeit eines neuen Basiselements in einer Mehrzahl von begrenzten Räumen. Für jeden begrenzten Raum ist ein Satz von Anforderungen definiert, der Stellflächenanforderungen, Elementanforderungen und Positionsanforderungen umfasst. In einer Elementdatenbank werden eine Vielzahl von bestehenden Basiselementen und das neue Basiselement gespeichert. Jeder Satz von Anforderungen für einen begrenzten Raum wird in logische Regeln umgesetzt. Für jeden begrenzten Raum wird eine neue Anordnung von strukturellen Elementen automatisch bestimmt, indem strukturelle Elemente von einem auf einer Datenverarbeitungseinrichtung ausgeführten Interpreter aus den in der Elementdatenbank gespeicherten Basiselementen so angeordnet werden, dass der in logische Regeln umgesetzte Satz von Anforderungen an den jeweiligen begrenzten Raum erfüllt wird. Weiterhin wird ein System zur Durchführung des Verfahrens beansprucht und beschrieben.

## Beschreibung

Die vorliegende Erfindung betrifft ein Verfahren zur Evaluierung einer Verwendbarkeit eines neuen Basiselements, das für eine Verwendung in einer Mehrzahl von begrenzten Räumen vorgesehen ist, sowie ein System zur Evaluierung einer Verwendbarkeit eines neuen Basiselements, das für eine Verwendung in einer Mehrzahl von begrenzten Räumen vorgesehen ist.

Zur Konfiguration einer Flugzeugkabine, die ein Beispiel für einen begrenzten Raum darstellt, werden verschiedenste strukturelle Elemente in der Flugzeugkabine angeordnet. Als strukturelle Elemente einer Flugzeugkabine können beispielsweise Sitze, Bordküchen und Waschräume, aber auch Trolleys für die Bewirtung von Passagieren oder eine bestimmte Ausstattung eines Faches in einer Bordküche bezeichnet werden.

Zur Reduzierung des Aufwandes, der mit der Konfiguration eines begrenzten Raumes, wie einer Flugzeugkabine, unter Berücksichtigung einer Vielzahl von Anforderungen und technischen Regeln verbunden ist, können computergestützte Systeme verwendet werden, mit denen Elemente in der Flugzeugkabine von einem Nutzer angeordnet werden können. Das System überprüft fortlaufend, ob die von dem Nutzer vorgesehene Anordnung angesichts der beispielsweise in einer Datenbank hinterlegten technischen Regeln zulässig ist. Dem Nutzer wird somit bereits frühzeitig mitgeteilt, ob eine vorgesehene Konfiguration einer Flugzeugkabine überhaupt technisch realisierbar ist. Dadurch wird im Vergleich zu einem System, bei dem die Überprüfung der Einhaltung der technischen Regeln erst nach Abschluss der Planung erfolgt, erheblicher Aufwand vermieden.

Ebenfalls bekannt sind Systeme und Verfahren, bei denen die Konfiguration einer Flugzeugkabine automatisch auf Grundlage von kundenspezifischen Konfigurationsdaten und technischen Regeln erzeugt wird. So sind beispielsweise aus EP 2 960 839 A1 ein System und ein Verfahren zur automatischen Erzeugung von Kabinenlayouts für Flugzeugkabinen bekannt. Dabei gibt ein Nutzer über ein Eingabemodul kundenspezifische Konfigurationsdaten für eine Flugzeugkabine vor, die unter anderem bestimmte Einrichtungskomponenten für die Kabine identifizieren und Positionen der Einrichtungskomponenten angeben. Zudem ist eine Datenbank mit Regeln vorgesehen, die die Installation von Einrichtungskomponenten in der Flugzeugkabine betreffen. Mittels einer Verarbeitungseinheit wird aus den kundenspezifischen Konfigurationsdaten unter Berücksichtigung der in der Datenbank hinterlegten Regeln ein Kabinenlayout für eine Flugzeugkabine ermittelt.

Weiterhin ist aus EP 3 101 615 A1 ein System bekannt, mit dem ein Flugzeug konfiguriert werden kann. Das System umfasst ein Eingabemodul, mit dem kundenspezifische Design- oder Konfigurationsdaten für ein Flugzeug eingegeben werden können, sowie eine Datenbank, in der Regeln betreffend die Installation von Komponenten in dem Flugzeug enthalten sind. Eine Verarbeitungseinheit konfiguriert auf Grundlage der Regeln und der kundenspezifischen Design- und Konfigurationsdaten ein Flugzeug und variiert dabei automatisch die kundenspezifischen Design- und Konfigurationsdaten, um das Design oder die Konfiguration des Flugzeugs zu verändern.

Die bisher bekannten Lösungen setzen somit im Wesentlichen auf den Wünschen des Kunden hinsichtlich der Ausstattung der Flugzeugkabine auf und versuchen diese so gut wie möglich unter Verwendung der zur Verfügung stehenden Komponenten zur Kabinenausstattung sowie der technischen Beschränkungen an die Anordnung der Komponenten in der Kabine zu erfüllen. Dabei werden die strukturellen Elemente, die in der Kabine angeordnet werden, aus einer Menge von strukturellen Elementen ausgewählt, die beispielsweise für einen bestimmten Flugzeugtyp zusammen mit dem Flugzeugtyp entwickelt wurden.

Werden hingegen neue strukturelle Elemente wie beispielsweise eine neue Bordküche, eine neue Art von Flugzeugsitzen oder eine neuer Waschraum mit unterschiedlichen Abmessungen entwickelt, der für viele verschiedene Kabinen verwendbar sein soll, so muss manuell überprüft werden, ob das neue strukturelle Element in der jeweiligen Kabine verwendet werden kann. Zudem ist für den Entwickler des neuen strukturellen Elements nicht absehbar, ob das strukturelle Element tatsächlich in Flugzeugkabinen verwendet werden würde, da der Entwickler nicht abschätzen kann, wie sich die neuen strukturellen Elemente auf die übrige Konfiguration der Kabine auswirken.

Vor diesem Hintergrund ist es eine Aufgabe der vorliegenden Erfindung, ein Verfahren und ein System anzugeben, mit dem evaluiert werden kann, ob ein neues strukturelles Element in einer Mehrzahl von begrenzten Räumen verwendet werden kann und welche Auswirkungen die Verwendung des strukturellen Elements hat.

Die der Erfindung zugrundliegenden Aufgaben wird durch ein Verfahren gemäß Anspruch 1 sowie ein System gemäß Anspruch 13 gelöst.

Gemäß einem ersten Aspekt wird die der Erfindung zugrunde liegende Aufgabe von einem Verfahren zur Evaluierung einer Verwendbarkeit eines neuen Basiselements, das für eine Verwendung in einer Mehrzahl von begrenzten Räumen vorgesehen ist, gelöst. Im Rahmen des Verfahrens wird für jeden begrenzten Raum der Mehrzahl von begrenzten Räumen ein Satz von Anforderungen an den jeweiligen begrenzten Raum definiert, wobei jeder Satz von Anforderungen für einen begrenzten Raum der Mehrzahl von begrenzten Räumen Stellflächenanforderungen, Elementanforderungen und Positionsanforderungen umfasst, wobei jede Stellflächenanforderung eine Position einer Stellfläche in dem begrenzten Raum und eine Abmessung der Stellfläche definiert, auf der ein oder mehrere strukturelle Elemente positioniert werden können, wobei jede Elementanforderung zumindest ein strukturelles Element definiert, das in dem begrenzten Raum angeordnet werden muss, und wobei jede Positionsanforderung eine Position zumindest eines strukturellen Elements in dem begrenzten Raum einschränkt, werden in einer Elementdatenbank eine Vielzahl von bestehenden Basiselementen und das neue Basiselement gespeichert werden, wobei für jedes Basiselement in der Elementdatenbank zumindest räumliche Abmessungen des Basiselements hinterlegt sind, wird jeder Satz von Anforderungen für einen begrenzten Raum in logische Regeln umgesetzt, wird für jeden begrenzten Raum der Mehrzahl von begrenzten Räumen eine neue Anordnung von strukturellen Elementen automatisch bestimmt, in dem strukturelle Elemente von einem auf einer Datenverarbeitungseinrichtung ausgeführten Interpreter oder Suchalgorithmus aus den in der Elementdatenbank gespeicherten Basiselementen so ausgewählt und in dem jeweiligen begrenzten Raum so angeordnet werden, dass der in logische Regeln umgesetzte Satz von Anforderungen an den jeweiligen begrenzten Raum erfüllt wird, und wird überprüft, ob das neue Basiselement von dem Interpreter ausgewählt und in einem oder mehreren der begrenzten Räume der Mehrzahl von begrenzten Räumen angeordnet wird.

Mit anderen Worten ermöglicht das Verfahren eine automatische Evaluierung oder Bewertung, ob ein neues Basiselement in verschiedenen begrenzten Räumen, die jeweils auf Grundlage eines entsprechenden Anforderungssatzes konfiguriert werden, verwendet werden kann oder nicht. Unter der Verwendbarkeit kann dabei die grundsätzliche Möglichkeit verstanden werden, ob das neue Basiselement in dem begrenzten Raum überhaupt eingesetzt werden kann. Im Vordergrund steht im vorliegenden Verfahren jedoch die Frage, ob das neue Basiselement in einem bestimmten begrenzten Raum eingesetzt wird, wenn man die an den begrenzten Raum gestellten Anforderungen berücksichtigt, auf deren Grundlage die Auswahl und Anordnung von strukturellen Elementen in dem Raum vorgenommen wird. Wird ein neues Basiselement als strukturelles Element in einem begrenzten Raum eingesetzt, so kann die Evaluierung der Verwendbarkeit zudem die Bestimmung von Maßen umfassen, anhand derer ermittelt, welche Auswirkung die Verwendung des neuen Basiselements hat.

Mit anderen Worten ermöglicht das Verfahren ein kombiniertes und automatisiertes Auswählen und Anordnen von strukturellen Elementen in einem begrenzten Raum. Ein begrenzter Raum hat dabei vorbekannte und beschränkte Abmessungen, innerhalb derer die strukturellen Elemente angeordnet werden müssen. Ein Beispiel für einen begrenzten Raum ist die Passagierkabine eines Flugzeugs, in der eine Vielzahl von strukturellen Elementen angeordnet werden müssen. Die strukturellen Elemente, deren räumliche und körperliche Abmessungen ebenfalls bereits bekannt sind, können beispielsweise Monumente für Bordküchen oder Waschräume sein. Andere Beispiele für strukturelle Elemente sind Passagiersitze oder Sitze für Flugbegleiter, aber auch Bestandteile bzw. Ausstattungen der Monumente wie Trolleys, Öfen, Kaffeemaschinen oder dergleichen. Ein anderes Beispiel für einen begrenzten Raum sind die Bereiche eines Flugzeugs, in dem Leitungen zur Versorgung der Kabine angeordnet werden können. Die strukturellen Elemente umfassen in diesem Beispiel verschiedene Versorgungsleitungen und Entsorgungsleitungen, beispielsweise die Leitungen für die Versorgung mit Strom, Daten, Kühlmittel und Frischluft.

Im Rahmen des Verfahrens wird für jeden der begrenzten Räume, für den die Verwendbarkeit des neuen Basiselements evaluiert werden soll, ein Satz von Anforderungen definiert, die die in dem begrenzten Raum angeordneten strukturellen Elemente erfüllen sollen. Die Anforderungen an einen begrenzten Raum können in zumindest drei verschiedene Gruppen unterteilt werden: Stellflächenanforderungen, Elementanforderungen und Positionsanforderungen.

Stellflächenanordnungen betreffen die räumliche Aufteilung des jeweiligen begrenzten Raumes in Stellflächen, auf denen strukturelle Elemente angeordnet werden können. Der Begriff der Stellfläche kann dabei eine zweidimensionale Fläche bezeichnen, auf der ein strukturelles Element oder mehrere strukturelle Elemente angeordnet werden dürfen. Die Stellflächenanforderung kann aber auch eine dritte Dimension umfassen, also eine räumliche Einheit sein, so dass auch der für strukturelle Elemente zur Verfügung stehende Platz in der dritten Dimension berücksichtigt wird. Beispielsweise kann die Grundfläche einer Flugzeugkabine in Stellflächen unterteilt werden, auf denen Bordküchen oder Waschräume angeordnet werden können, die durch Gangflächen und Flächen für Sitze unterbrochen werden, in denen keine strukturellen Elemente bzw. nur Sitze angeordnet werden dürfen. Es handelt sich bei den Stellflächenanforderungen somit um die tatsächlichen, realen Abmessungen des begrenzten Raumes, der zur Verfügung steht, um darauf Objekte anzuordnen.

Elementanforderungen definieren strukturelle Elemente, die in dem begrenzten Raum angeordnet werden müssen oder sollen. Elementanforderungen können dabei sehr konkret sein, indem sie ein bestimmtes strukturelles Element erfordern, also beispielsweise einen bestimmten Waschraum oder ein bestimmtes Bordküchenelement, oder auch nur allgemein eine Kategorie von strukturellen Elemente definieren, wie beispielsweise eine allgemeine Bordküche, deren weitere Eigenschaften sich beispielsweise aus zusätzlichen Anforderungen ergeben können. Eine Elementanforderung kann somit beispielsweise dazu verwendet werden, um die Auswahl eines neuen Basiselements als strukturelles Element für einen beschränkten Raum zu erzwingen, indem die Elementanforderung vorgibt, dass das neue Basiselement ausgewählt werden muss, sofern es zur Verfügung steht.

Schließlich schränken Positionsanforderungen die Position von strukturellen Elementen in dem begrenzten Raum ein. Positionsanforderungen können beispielsweise von einem Kunden vorgegebenen werden, der eine symmetrische Gestaltung des begrenzten Raumes möchte oder bestimmte Elemente auf bestimmten Stellflächen oder zumindest in bestimmten Bereichen eines begrenzten Raumes. Positionsanforderungen können aber auch durch Regularien vorgegeben sein, die beispielsweise Flugbegleitersitze an bestimmten Positionen in einer Flugzeugkabine notwendig machen. Auch können Positionsanforderungen durch die strukturellen Elemente selber vorgegeben werden. Beispielsweise kann ein strukturelles Element eine Stellfläche mit einer bestimmten Raumhöhe erfordern. Weiterhin können Positionsanforderungen durch die Ausgestaltung des begrenzten Raumes vorgegeben sein. So können beispielsweise strukturelle Elemente, die einen Wasseranschluss benötigen, nur dort angeordnet werden, wo ein Wasseranschluss vorgesehen ist. Schließlich werden die in der Elementdatenbank hinterlegten Abmessungen von Basiselementen auch zu Positionsanforderungen umgesetzt, da die Position eines Basiselements aufgrund seiner Abmessungen stets insoweit eingeschränkt wird, als dass es nur auf Stellflächen platziert werden kann, die ausreichend freien Platz zur Aufnahme des Basiselements bieten.

Im Rahmen des Verfahrens ist für jeden begrenzten Raum eine Vielzahl von strukturellen Elementen vorgesehen ist, die grundsätzlich in dem jeweiligen begrenzten Raum angeordnet werden können. Diese strukturellen Elemente werden als Basiselemente bezeichnet und sind in einer Elementdatenbank abgelegt. Dabei wird vorliegend zwischen bestehenden Basiselementen und dem neuen Basiselement unterschieden. Unter einem bestehenden Basiselement wird ein bekanntes Basiselement bezeichnet, das bereits in den begrenzten Räumen verwendet wird bzw. dessen Verwendbarkeit bekannt ist. Das neue Basiselement ist hingegen das Basiselement, dessen Verwendbarkeit überprüft bzw. ermittelt werden soll. Das neue und die bestehenden Basiselemente werden zusammen als Basiselemente bezeichnet.

Die Elementdatenbank kann für jedes strukturelle Element oder Objekt verschiedene Varianten, Abwandelungen oder Unterformen aufweisen, die jeweils als Basiselemente bezeichnet werden. Beispielsweise können für ein Waschraummonument verschiedene Varianten in der Datenbank hinterlegt sein, die verschiedene Abmessungen und/oder verschiedene Eigenschaften aufweisen. Auch innerhalb einer Variante kann beispielweise aus verschiedenen Untervarianten ausgewählt werden, die sich beispielsweise durch einen hierarchischen Aufbau der Datenbank ergeben. So kann beispielsweise bei einem Monument für eine Bordküche zwischen Varianten mit festen Einbauten und Varianten mit Staufächern für Trolleys ausgewählt werden. Verschiedene Untervarianten können wiederum vorgeben, was in den verschiedenen Staufächern angeordnet werden kann und wie die in den Staufächern angeordneten Einsätze betrieben werden können.

In der Datenbank sind neben den Eigenschaften der Basiselemente und den Verhältnissen von Basiselementen zueinander für jedes Basiselement, also für die bestehenden und das neue Basiselement, insbesondere die Abmessungen des jeweiligen Basiselements hinterlegt, die bei der Auswahl und beim Anordnen der strukturellen Elemente zwingend berücksichtigt werden.

In einer beispielhaften Ausführungsform kann die Datenbank in Form einer Ontologie aufgebaut werden, also eine sprachlich gefasste und formal geordnete Darstellung der strukturellen Elemente sein, die nicht nur von einer Maschine sondern vorzugsweise auch von einem Menschen lesbar sind. Eine solche Ontologie kann beispielsweise sechs geordnete Ebenen aufweisen, die zur Beschreibung der körperlichen Eigenschaften und Varianten der verschiedenen strukturellen Elemente verwendet werden.

Die bisher beschriebene Abfolge von Verfahrensschritten ist nicht notwendigerweise einzuhalten. So kann beispielsweise die Definition der Anforderungen parallel mit der Speicherung der Basiselemente in der Elementdatenbank erfolgen. Es ist auch möglich, zunächst alle bestehenden Basiselemente in der Elementdatenbank zu speichern bzw. eine bestehende Elementdatenbank zu übernehmen, was dem entspricht, nachfolgend die Anforderungen zu definieren, dann das neue Basiselement in der Elementdatenbank zu speichern und anschließend optional noch Änderungen an den Anforderungen vorzunehmen.

Bevor auf Grundlage der Anforderungssätze strukturelle Elemente aus der Elementdatenbank ausgewählt werden können, werden die Sätze von Anforderungen in logische Regeln überführt und damit vereinheitlich. So können beispielsweise technische und regulatorische Beschränkungen und Vorgaben, räumliche Abmessungen von strukturellen Elementen und Anforderungen eines Kunden an eine Flugzeugkabine zu einem einheitlichen Satz von Anforderungen zusammengefasst und gleichermaßen bei der Auswahl und Anordnung der strukturellen Elemente in einem begrenzten Raum berücksichtigt werden. Auch dieser Schritt muss nicht zwingend nach Abschluss der übrigen Verfahrensschritte erfolgen. Vielmehr ist es beispielsweise denkbar, jede definierte Anforderung unmittelbar in eine logische Regel umzuwandeln oder aber die Anforderungen unmittelbar als logische Regeln zu verfassen.

Das auf einer Datenverarbeitungseinrichtung implementierte Verfahren wählt anschließend mittels eines Interpreter, der auch als Reasoner bezeichnet werden kann, für jeden begrenzten Raum strukturelle Elemente aus der Elementdatenbank aus, die in dem jeweiligen begrenzten Raum angeordnet werden. Die Auswahl und Anordnung der Elemente erfolgt so, dass möglichst viele Anforderungen des Anforderungssatzes erfüllt werden, die an den jeweiligen begrenzten Raum gestellt werden. Dabei berücksichtig der Interpreter aber in jedem Fall aufgrund der Stellflächenanforderungen, der Positionsanforderungen sowie der Abmessungen der Basiselemente in der Elementdatenbank die Abmessungen des jeweiligen begrenzten Raumes und der ausgewählten Basiselemente, um sicherzustellen, dass alle ausgewählten Basiselemente auch tatsächlich als strukturelle Elemente auf den jeweiligen Stellflächen in dem begrenzten Raum angeordnet werden können.

Der Interpreter sucht eine Lösung für die Anforderungen bzw. den Satz von Anforderungen an den jeweiligen begrenzten Raum, der alle oder möglichst viele der Anforderungen an den begrenzten Raum erfüllen. Hierzu kann beispielsweise logische Programmierung verwendetet werden In diesem Fall stellen die Anforderungen an einen begrenzten Raum Axiome dar, auf deren Grundlage ein Interpreter versucht eine Lösung zu finden. In einem bevorzugten Ausführungsbeispiel wird Answer Set Programming als eine Form der logischen Programmierung verwendet, um die strukturellen Elemente auf Grundlage der Anforderungen aus der Elementdatenbank auszuwählen und in dem begrenzten Raum anzuordnen.

Abschließend wird schließlich überprüft, ob das neue Basiselement von dem Interpreter ausgewählt und in den jeweiligen begrenzten Räumen angeordnet wird. Da der Interpreter bei der Auswahl und Anordnung der Basiselemente als strukturelle Elemente in dem jeweiligen begrenzten Raum eines Vielzahl von Anforderungen oder Kriterien berücksichtig und - je nach Ausgestaltung der Elementdatenbank und Definition der Anforderungen - unter einer Vielzahl von verschiedenen bestehenden Basiselementen und dem neuen Basiselement auswählen kann, ermöglicht das anspruchsgemäße Verfahren eine automatisierte Überprüfung, ob ein neues Basiselement überhaupt sinnvoll in einem oder mehreren begrenzten verwendet werden kann bzw. verwendet werden würde.

In einer bevorzugten Ausführungsform wird für jeden begrenzten Raum der Mehrzahl von begrenzten Räumen mittels der Datenverarbeitungseinrichtung zumindest ein Maß für die jeweilige neue Anordnung von strukturellen Elementen bestimmt, wobei das Maß dazu geeignet ist, um die erfolgte Auswahl und Anordnung der Mehrzahl von strukturellen Elementen in dem jeweiligen begrenzten Raum zu bewerten.

Die Bestimmung eines oder mehrere Maßes für die neuen Anordnungen ermöglicht die automatische oder zumindest objektive Bewertung, wie sich die Auswahl und Anordnung eines neuen Basiselements in einem begrenzten Raum auswirkt. Beispielsweise kann so bestimmt werden, ob technische Beschränkungen gegen die Anordnung des neuen Basiselements sprechen, die nicht durch Anforderungen abgedeckt werden.

Es ist weiterhin bevorzugt, wenn im Rahmen des Verfahrens für jeden begrenzten Raum der Mehrzahl von begrenzten Räumen automatisch eine bestehende Anordnung bestimmt wird, in dem strukturelle Elemente von einem auf einer Datenverarbeitungseinrichtung ausgeführten Interpreter nur aus den in der Elementdatenbank gespeicherten bestehenden Basiselementen so ausgewählt und in dem jeweiligen begrenzten Raum so angeordnet werden, dass der in logische Regeln umgesetzte Satz von Anforderungen an den jeweiligen begrenzten Raum erfüllt wird, für jeden begrenzten Raum der Mehrzahl von begrenzten Räumen mittels der Datenverarbeitungseinrichtung zumindest ein Maß für die jeweilige bestehende Anordnung von strukturellen Elementen bestimmt wird, wobei für die bestehende Anordnung jeden begrenzten Raumes das gleiche zumindest eine Maß bestimmt wird, das für die neue Anordnung des bestehenden Raumes bestimmt wird, und aus der Veränderung des Maßes von der bestehenden Anordnung zur neuen Anordnung auf die Verwendbarkeit des neuen Basiselements geschlossen werden kann.

Die bevorzugte Ausführungsform ermöglicht auf besonders vorteilhafte Weise, die Einführung eines neuen Basiselements und damit dessen Verwendbarkeit zu bewerten, in dem durch den Vergleich eines Maßes, das sowohl für eine Kabinenanordnung bestimmt wird, für die ausschließlich auf bestehende Basiselement zurückgegriffen werden konnte, als auch für eine Kabinenanordnung, für die auch auf das neue Basiselement zurückgegriffen werden konnte. Dabei wird vorzugsweise der identische Anforderungssatz bei der Ermittlung der bestehenden und der neuen Kabinenanordnung verwendet. Der Anforderungssatz kann dabei beispielsweise so ausgestaltet sein, dass der die Anordnung des neuen Basiselements als strukturelles Element erzwingt, wenn es verfügbar ist, um die Auswirkung der Anordnung des neuen Basiselements bestimmen zu können.

Vorzugsweise umfasst das zumindest eine Maß einen Schwerpunkt des begrenzten Raums und/oder eine Leistungskennzahl. Beispielsweise kann ein Maß wie der Schwerpunkt dazu verwendet werden, die Tragfähigkeit der Struktur zu überprüfen, die den begrenzten Raum aufnimmt. Es können aber auch solche Maße bestimmt werden, mit denen die Auswahl und Anordnung der strukturellen Elemente aus wirtschaftlichen Aspekten bewertet werden kann, beispielsweise können die Kosten für eine bestimmte Anordnung ermittelt werden. Solche Maße werden auch als Leistungskennzahlen oder Key-Performance-Indicators (KPI) bezeichnet. Die bestimmten Maße können insbesondere zum Erkennen von Defiziten verwendet werden.

In einer bevorzugten Ausführungsform umfasst die Mehrzahl von begrenzten Räumen eine erste Gruppe von begrenzten Räumen, wobei jeder begrenzte Raum der ersten Gruppe identische äußere Abmessungen aufweist, innerhalb derer die Stellflächen definiert sind. Jeder Satz von Anforderungen an einen begrenzten Raum der ersten Gruppe unterscheidet sich in zumindest einer Anforderung von allen anderen Sätzen von Anforderungen an einen begrenzten Raum der ersten Gruppe. Beispielsweise kann die erste Gruppe von begrenzten Räumen eine Flugzeugkabine eines ersten Flugzeugtyps sein, die mittels verschiedener Anforderungssätze für unterschiedliche Mission, wie beispielsweise innerdeutsche, innereuropäische oder inneramerikanische Flugstrecken von Küste zu Küste definiert wird. Die Gruppe von begrenzten Räumen kann in diesem Fall auch als virtuelle Flotte eines bestimmten Models bezeichnet werden.

Vorzugsweise umfasst die Mehrzahl von begrenzten Räumen eine zweite Gruppe von begrenzten Räumen, wobei jeder begrenzte Raum der zweiten Gruppe identische äußere Abmessungen aufweist, innerhalb derer die Stellflächen definiert sind. Die äußeren Abmessungen der begrenzten Räume der ersten Gruppe unterscheiden sich von den äußeren Abmessungen der begrenzten Räume der zweiten Gruppe. Jeder Satz von Anforderungen an einen begrenzten Raum der zweiten Gruppe unterscheidet sich in zumindest einer Anforderung von allen anderen Sätzen von Anforderungen an einen begrenzten Raum der zweiten Gruppe. Die zweite Gruppe kann beispielsweise die für unterschiedliche Missionen konfigurierte Kabine eines zweiten Flugzeugtyps sein, die damit ebenfalls Teil der virtuellen Flotte ist. Eine virtuelle Flotte kann mehr als nur zwei Gruppen von begrenzten Räumen mit identischen Abmessungen aufweisen.

Damit lässt sich das vorliegende Verfahren auf vorteilhafte Weise dazu verwenden, die Verwendbarkeit für bestimmte Flugzeugmuster innerhalb einer virtuellen Flotte zu überprüfen, die das Flugzeugmuster für verschiedene Missionen oder Einsätze konfigurieren. Dies ermöglicht, die Verwendbarkeit eines neuen Basiselementes für eine Vielzahl von relevanten Einsatzzwecken gleichzeitig zu ermitteln.

In einer bevorzugten Ausführungsform liegen die Stellflächen innerhalb von äußeren Abmessungen des begrenzten Raums und werden durch eine oder mehrere Sperrflächen eingeschränkt, auf denen keine strukturellen Elemente positioniert werden dürfen. Beispielsweise können Sperrfläche Gang- und Türbereiche einer Flugzeugkabine sein.

Es ist weiterhin bevorzugt, wenn das Definieren der Stellflächenanforderungen ein Ermitteln von Abmessungen des jeweiligen begrenzten Raumes umfasst.

Vorzugsweise umfasst zumindest ein Satz von Anforderungen an einen begrenzten Raum weiterhin Betriebsanforderungen, wobei jede Betriebsanforderung den Betrieb zumindest eines strukturellen Elements vorgibt. Betriebsanforderungen können beispielsweise vorgeben, welche Funktionen ein bestimmtes strukturelles Element oder allgemein von dem begrenzten Raum und damit insgesamt von den in dem Raum angeordneten strukturellen Elementen zur Verfügung gestellt werden sollen. Beispielsweise kann eine Betriebsanforderung definieren, dass eine Möglichkeit bereitstehen muss, um verschiedene Mahlzeiten in einer Bordküche zu erwärmen. Denkbar sind auch Betriebsanforderung, die die Verwendung eines Waschraums als WC, Wickelraum und Dusche notwendig machen, wobei nicht konkret angefordert werden muss, dass ein Waschraum alle Funktionen bereitstellt, sondern lediglich Betriebsanforderungen definiert werden, die sicherstellen, dass die unterschiedlichen Betriebsarten bzw. Funktionen auf irgendeine Weise auf dem beschränkten Raum bereitgestellt wird. Dies hat den Vorteil, dass der Nutzer des Verfahrens nicht die Verwendung bestimmter struktureller Komponenten vorgeben muss, sondern vielmehr das Verfahren aufgrund der Anforderungen geeignete Komponenten auswählt. Damit hängt die Konfiguration nicht vom Vorstellungsvermögen und den Kenntnissen der Person ab, die den Raum konfiguriert, sondern wird auf Grundlage des technisch Möglichen und im Rahmen der räumlich vorgegebenen Beschränkungen automatisch umgesetzt.

Es ist weiterhin bevorzugt, wenn zumindest ein Satz von Anforderungen an einen begrenzten Raum Personalanforderungen und Tätigkeitsanforderungen umfasst, wobei jede Personalanforderung die Anwesenheit zumindest einer Person in dem begrenzten Raum definiert und Abmessungen vorgibt, die die zumindest eine Person in dem begrenzten Raum einnimmt, und wobei jede Tätigkeitsanforderung die Tätigkeit zumindest einer in dem begrenzten Raum anwesenden Person in Bezug auf zumindest ein strukturelles Element definiert.

Durch die Aufnahme von Personal- und Tätigkeitsanforderungen ist es auf vorteilhafte Weise möglich, auch den Einsatz von Personal und die Tätigkeiten des Personals bei der Auswahl und Anordnung von strukturellen Elementen in dem beschränkten Raum zu berücksichtigen. Da jeder Person Abmessungen zugeordnet sind, kann beispielsweise sichergestellt werden, dass bei der Durchführung bestimmter Prozesse bzw. bestimmter Prozessschritte auch ausreichend Platz für eine Person ist, die diese Prozessschritte durchführt bzw. überwacht.

In einer bevorzugten Ausführungsform sind die begrenzten Räume Fahrzeugkabinen, vorzugsweise Kabinen eines Passagierflugzeugs. Dabei ist es bevorzugt, wenn jeder Satz von Anforderungen Elementanforderungen umfasst, die zumindest eine erste Anzahl von Passagiersitzplätzen in der Fahrzeugkabine sowie eine zweite Anzahl von Kabinenpersonalsitzplätzen definieren. Das zumindest eine Maß, das für die neue Anordnung von strukturellen Elementen in jedem begrenzten Raum der Mehrzahl von begrenzten Räumen mittels der Datenverarbeitungseinrichtung bestimmt wird, ist vorzugsweise ein Anteil der Passagiersitzplätze, die in einem Sichtfeld von Kabinenpersonalsitzplätzen liegen.

In einem zweiten Aspekt wird das der Erfindung zugrundeliegende Problem mit einem System zur automatisierten Evaluierung einer Verwendbarkeit eines neuen Basiselements, das für eine Verwendung in einer Mehrzahl von begrenzten Räumen vorgesehen ist, gelöst. Das System umfasst eine Datenverarbeitungseinrichtung und einen Datenspeicher und ist dazu eingerichtet, ein Verfahren gemäß einer der zuvor beschriebenen Ausführungsformen auszuführen, wobei die Elementdatenbank in dem Datenspeicher gespeichert ist.

Nachfolgend wird die Erfindung bezugnehmend auf die Zeichnung näher erläutert. Darin zeigen
- Figur 1: ein Ablaufdiagramm eines Ausführungsbeispiels eines Verfahrens zur Evaluierung einer Verwendbarkeit eines neuen Basiselements in einer Mehrzahl von begrenzten Räumen,
- Figur 2: Ausführungsbeispiele einer ersten und einer zweiten Gruppe von begrenzten Räumen,
- Figur 3: ein Ausführungsbeispiel eines begrenzten Raumes mit Stellflächen,
- Figur 4: Ausführungsbeispiele von Basiselementen für einen begrenzten Raum,
- Figur 5: eine Ausführungsbeispiel eines begrenzten Raumes mit darin angeordneten strukturellen Elementen und
- Figur 6: ein Ausführungsbeispiel eines Systems zum automatisierten Auswählen von strukturellen Elementen für einen begrenzten Raum und zum Anordnen der strukturellen Elemente in dem begrenzten Raum.

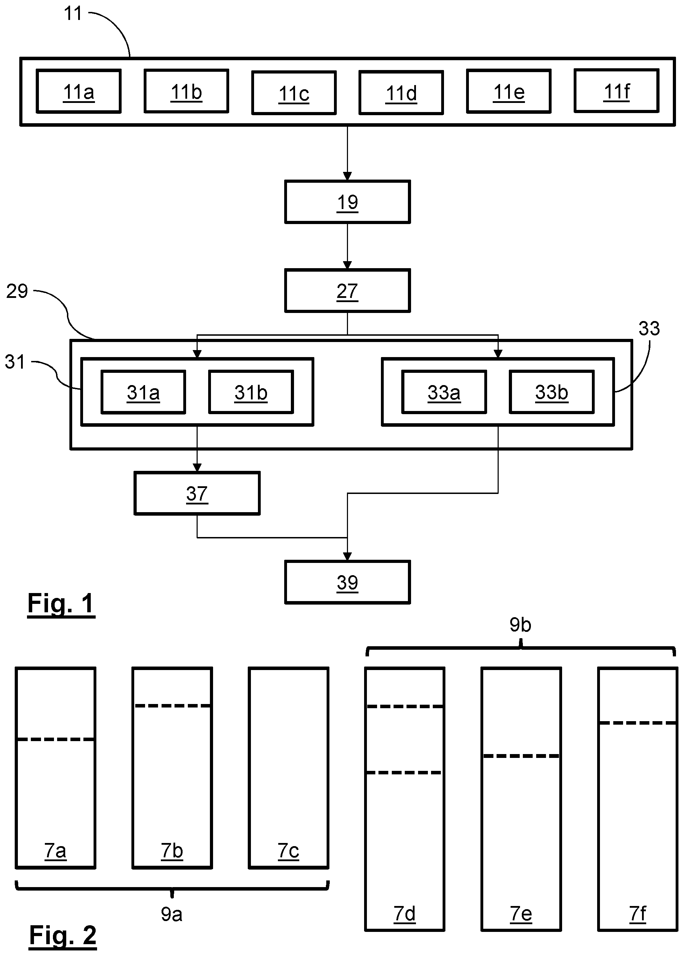

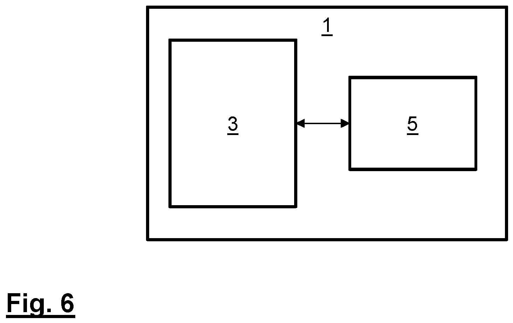

Nachfolgend wird bezugnehmend auf die Figuren 1 bis 6 ein Ausführungsbeispiel eines Verfahrens zur Evaluierung einer Verwendbarkeit eines neuen Basiselements in einer Mehrzahl von begrenzten Räumen. Figur 1 zeigt ein Ablaufdiagramm, anhand dessen der Ablauf des Verfahrens nachfolgend näher erläutert wird. Das Verfahren wird mittels eines Ausführungsbeispiels eines in Figur 6 gezeigten Systems 1 durchgeführt, dass eine Datenverarbeitungsvorrichtung 3 und einen Speicher oder Datenspeicher 5 umfasst.

Figur 2 zeigt eine Mehrzahl von begrenzten Räumen 7a bis 7e, die in der Beschreibung auch kumulativ mit dem Bezugszeichen 7 bezeichnet werden, für die ein neues Basiselement vorgesehen ist. Mittels des vorliegenden Verfahrens soll ermittelt werden, ob das Basiselement zur Verwendung in den begrenzten Räumen 7 geeignet ist.

Bei den begrenzten Räumen 7 handelt es sich in dem vorliegenden Ausführungsbeispiel um Flugzeugkabinen 7, die in eine erste Gruppe 9a und eine zweite Gruppe 9b untereilt sind. Jede Gruppe 9a, 9b umfasst jeweils drei Flugzeugkabinen 7 identischer Abmessungen, innerhalb derer strukturelle Elemente angeordnet werden müssen. Die erste Gruppe 9a umfasst die Flugzeugkabinen 7a, 7b und 7c, die zweite Gruppe 9b umfasst die Flugzeugkabinen 7d, 7e und 7f. Bei den beiden Gruppen handelt es sich vorzugsweise um unterschiedliche Flugzeugmuster. Beispielsweise sind die Flugzeugkabinen 7a, 7b, 7c der ersten Gruppe 9a für einen Kurzstreckenflugzeug, währen die Flugzeugkabinen 7d, 7e, 7f für ein Langstreckenflugzeug sind.

In einem ersten Schritt 11 des Verfahrens wird für jede der Flugzeugkabinen 7 ein Satz von Anforderungen definiert. Von den Flugzeugkabinen 7a, 7b, 7c der ersten Gruppe 9a wird für keine zwei Flugzeugkabinen 7a, 7b, 7c der gleiche Satz von Anforderungen definiert. Auch für die Flugzeugkabinen 7d, 7e, 7f wird für keine zwei Flugzeugkabinen 7d, 7e, 7f der gleiche Satz von Anforderungen definiert. In Figur 2 werden die verschiedenen Anforderungssätze schematisch durch gestrichelte Linien symbolisiert, die sich quer durch die Kabinenanordnungen erstrecken und die Aufteilung der Flugzeugkabinen in verschiedene Beförderungsklassen wie First, Business und Economy darstellen. Beispielsweise umfassen die Anforderungen für das erste und zweite Kabinenlayout 7a, 7b zwei Beförderungsklassen, aber mit unterschiedlichen Anteilen an den Beförderungsklassen, die von der geplanten Verwendung des Flugzeugs abhängen. Die Anforderungen an die dritte Flugzeugkabine sehen hingegen nur eine einheitliche Beförderungsklasse vor.

In dem vorliegenden Ausführungsbeispiel werden in verschiedenen Teilschritten 11a bis 11f des ersten Schritts 11 unter anderem Stellflächenanforderungen (Teilschritt 11a), Elementanforderungen (Teilschritt 11b), Positionsanforderungen (Teilschritt 11c), Betriebsanforderungen (Teilschritt 11d), Personalanforderungen (Teilschritt 11e) und Tätigkeitsanforderungen (Teilschritt 11f) definiert.

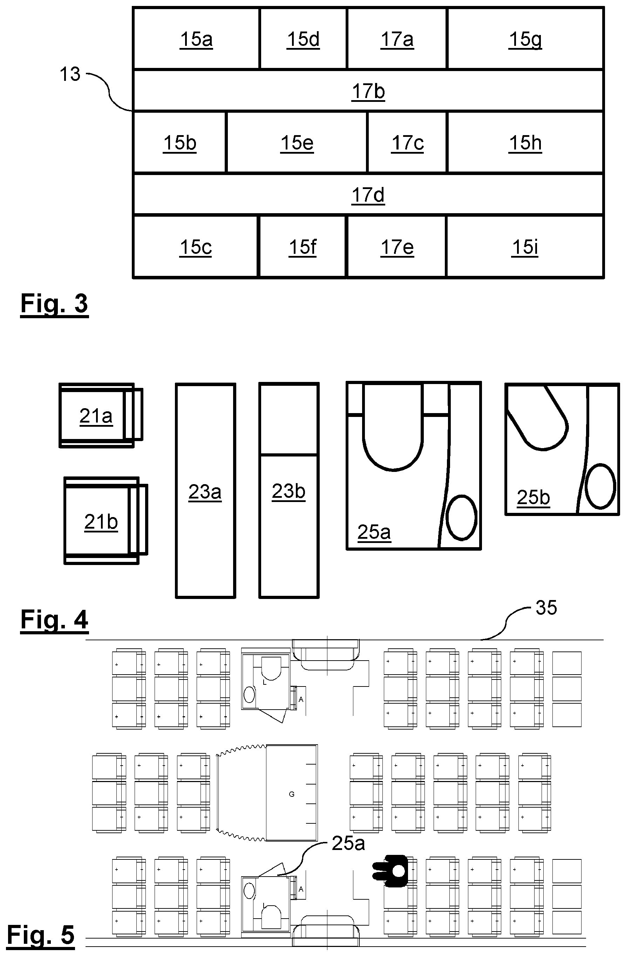

Bei der Definition von Stellflächenanforderungen für die Mehrzahl von Flugzeugkabinen 7 in Teilschritt 11a werden, wie nachfolgend bezugnehmend auf die schematische Darstellung eines Beispiels einer Flugzeugkabine 13 in Figur 3 näher erläutert, zunächst die äußeren Abmessungen des jeweiligen begrenzten Raumes 13 ermittelt, beispielsweise ausgemessen oder Zeichnungen entnommen, für den strukturelle Elemente ausgewählt werden sollen und in dessen begrenzten Abmessungen die Elemente angeordnet werden müssen.

In dem begrenzten Raum 17 werden nachfolgend Stellflächen 15a bis 15i festgelegt und deren Abmessungen bestimmt, in denen strukturelle Elemente angeordnet werden dürfen. Wie man Figur 3 unmittelbar entnehmen kann, haben die Stellflächen 15a bis 15i unterschiedliche Abmessungen. Zwischen den Stellflächen 15a bis 15i sind Sperrflächen 17a bis 17e angeordnet, auf denen keine strukturellen Elemente permanent angeordnet werden dürfen.

Im zweiten Teilschritt 11b werden für jeden der begrenzten Räume 7, d.h., für jede der Flugzeugkabinen, Elementanforderungen definiert, die die schließlich in der Flugzeugkabine 7 angeordneten strukturellen Elemente erfüllen müssen. Eine Elementanforderung kann beispielsweise die Anzahl der Waschräume pro Sitzplatz oder auch ein bestimmter Typ einer Bordküche oder eines Trolleys für eine Bordküche sein.

Im dritten Teilschritt 11c werden Positionsanforderungen für verschiedenen strukturelle Elemente definiert. Eine Positionsanforderung kann beispielsweise eine symmetrische Ausgestaltung der Kabine 7 relativ zu einer Längsachse der Kabine 7 sein, aber auch eine konkrete Anforderung, dass auf der Stellfläche 15e eine Bordküche anzuordnen ist.

Im vierten Teilschritt 11d werden Betriebsanforderungen definiert, die vorgeben, wie eines oder mehrere der nach Abschluss des Verfahrens in der Kabine 7 angeordneten strukturellen Elemente betrieben werden. Beispielsweise kann festgelegt werden, dass es möglich sein muss, Brötchen aufzuwärmen. Oder zumindest einer der Waschräume muss als Wickelraum nutzbar sein.

Im fünften und sechsten Teilschritt 11e und 11f werden Personal- und Tätigkeitsanforderungen festgelegt. Diese geben zum einen vor, wie viel Personal in dem begrenzten Raum anwesend sein muss, und zum anderen, welche Tätigkeiten das Personal ausüben muss. Beispielsweise kann festgelegt werden, dass eine bestimmte Person eine bestimmte Tätigkeit durchführen muss. Es ist aber auch möglich, lediglich festzulegen, dass eine bestimmte Tätigkeit durchgeführt werden muss. , ohne eine konkrete Person festzulegen, die die Tätigkeit durchführt.

Jede Person ist mit einer bestimmten Abmessung verknüpft, die diese Person während der Durchführung von bestimmten Tätigkeiten einnimmt, so dass auch der vom Personal benötigte Raum berücksichtigt werden kann.

In einem zweiten Schritt 19 des Verfahrens wird eine Elementdatenbank im Datenspeicher 5 des Systems 1 bereitgestellt bzw. gespeichert. In der Elementdatenbank werden eine Vielzahl von bestehenden Basiselementen und das neues Basiselement gespeichert, aus denen im Rahmen des Verfahrens verschiedene strukturelle Elemente ausgewählt und in den begrenzten Räumen 7 angeordnet werden sollen. Das neue Basiselement ist das Basiselement, dessen Verwendbarkeit in den begrenzten Räumen 7 im Rahmen des Verfahrens evaluiert werden soll.

Beispiele für Basiselemente 21a, 21b, 23a, 23b, 25a, 25b sind in Figur 4 gezeigt. Die Basiselemente 21a und 21b sind Sitze 21a, 21b mit unterschiedlichen Abmessungen, die Basiselemente 23a und 23b sind Trolleys 23a, 23b für eine Bordküche mit identischen Abmessungen, aber unterschiedlichem Funktionsumfang und die Basiselemente 25a, 25b sind Waschräume 25a, 25b mit unterschiedlichen Abmessungen und unterschiedlichem Funktionsumfang. Die Basiselemente 21a, 21b, 23a, 23b, 25a sind bestehende Basiselemente 21a, 21b, 23a, 23b, 25b, deren Verwendbarkeit für die begrenzten Räume 7 bereits bekannt ist. Bei dem Basiselement 25a handelt es sich um eine neues Basiselement 25a, dessen Verwendbarkeit für die begrenzten Räume 7 im Rahmen des vorliegenden Verfahrens ermittelt werden muss.

Beispielsweise handelt es sich bei dem schmaleren Sitz 21a um einem Sitz für die Economy-Klasse und bei dem breiteren Sitz 21b um einen Sitz für die Business-Klasse. Einer der beiden Trolleys 23a ist für Abfall vorgesehen, während der andere Trolley 23b einen Dampfofen umfasst. Die Waschräume 25a, 25b unterscheiden sich insbesondere darin, dass der neue Waschraum 25a über ein reguläres WC verfügt, während der bestehende Waschraum 25b lediglich über ein Urinal verfügt.

Diese Basiselemente 21a, 21b, 23a, 23b, 25a, 25b werden nach ihrer Art geordnet und zusammen mit ihren Funktionen und Abmessungen in der Elementdatenbank gespeichert, die im Speicher 5 des Systems 1 abgelegt ist.

Die Teilschritte 11a bis 11f des ersten Schritts 11 und der zweite Schritt 19 können in beliebiger Reihenfolge oder auch parallel zueinander durchgeführt werden.

In einem dritten Schritt 27 werden sämtliche Anforderungssätze in logische Regeln übersetzt oder umgesetzt, um das Anordnungsproblem, dass für jedem Satz von Anforderungen eine Vielzahl von technischen und anderen Anforderungen erfüllen muss, in ein logisches Problem zu überführen, so dass im vierten Schritt 29 mittels eines Interpreters, der in dem vorliegenden Ausführungsbeispiel auf Answer Set Programming beruht, für jeden Satz von Anforderungen eine Kabinenkonfiguration bestimmt werden kann.

Der vierte Schritt 29 ist in zwei Parallelschritte 31, 33 unterteilt, wobei im ersten Parallelschritt 31 in einem Teilschritt 31a die Auswahl von strukturellen Elementen für den jeweiligen begrenzten Raum 7 unter allen Basiselementen 21a, 21b, 23a, 23b, 25a, 25b erfolgt, die in der Elementdatenbank gespeichert worden sind. Insbesondere umfasst dies auch das neue Basiselemente 25a, das somit zur Anordnung in den begrenzten Räumen 7 ausgewählt werden kann. In einem zweiten Teilschritt 31b verwenden die ausgewählten Basiselemente zu einer neuen Anordnung für jeden der begrenzten Räume 7 angeordnet. In Figur 1 sind die Teilschritt 31a und 31b getrennt dargestellt. Tatsächlich sind sie aber untrennbar miteinander verbunden, da aufgrund der Definition der Anforderungen als logische Regeln stets die Auswahl eines Objektes mit der Anordnung des Objektes verbunden ist.

Im zweiten Parallelschritt 33 wird ebenfalls für jeden der begrenzten Räume 7 in einem ersten Teilschritt 33a eine bestehende Anordnung bestimmt, indem einen Auswahl von strukturellen Elementen für den jeweiligen begrenzten Raum 7 vorgenommen. Die Auswahl erfolgt aber nicht unter allen Basiselementen 21a, 21b, 23a, 23b, 25a, 25b, sondern lediglich untern den bekannten Basiselementen 21a, 21b, 23a, 23b, 25b. Mit anderen Worten kann das neue Basiselemente 25a nicht ausgewählt werden. In einem zweiten Teilschritt 33b werden die ausgewählten Basiselementen zu einer bestehenden Anordnung angeordnet.

Der erste und zweite Parallelschritt 31, 33 müssen nicht zeitlich parallel ausgeführt werden. Beispielsweise ist auch möglich, als zweiten Parallelschritt eine bereits zu einem früheren Zeitpunkt erfolgte Ermittlung von bestehenden Anordnungen heranzuziehen. Die Auswahl und Anordnung der Basiselemente in den begrenzten Räumen berücksichtigt dabei insbesondere die Abmessungen der Stellflächen und der Basiselemente.

Für die Bestimmung der bestehenden Anordnung und der neuen Anordnung sowie die entsprechende Auswahl von strukturellen Elementen aus den Basiselementen 21a, 21b, 23a, 23b, 25a, 25b für denselben begrenzten Raum 7 wird jeweils der gleiche Satz von Anforderungen zugrunde gelegt. Es wird somit für identische Anforderungen und identische räumliche Abmessungen automatisch jeweils eine neue Anordnung von strukturellen Elementen für jeden der begrenzten Räume 7 bzw. für jede Flugzeugkabine 7 bestimmt, bei der das neue Basiselement 25a verwendet werden konnte bzw. bei entsprechender Formulierung der Anforderungen verwendet werden musste, und eine bestehende Anordnung von strukturellen Elementen für jeden der begrenzten Räume 7 bzw. für jede Flugzeugkabine 7 bestimmt, für die das neue Basiselement 25a nicht verwendet werden durfte.

In Figur 5 ist eine beispielhafte neue Anordnung von strukturellen Elementen in einer Flugzeugkabine 35 gezeigt, die im vierten Verfahrensschritt 29 bestimmt wurde und in der das neue Basiselement 25a verwendet wird.

In einem fünften Verfahrensschritt 37 wird zur Evaluierung der Verwendbarkeit des neuen Basiselements 25a für jede der neuen Anordnung ermittelt, ob das neue Basiselement 25a verwendet wird.

Schließlich wird in einem abschließenden sechsten Verfahrensschritt 39 für jede neue Anordnung, die im Parallelschritt 31 bestimmt wurde, und jede bestehende Anordnung, die im Parallelschritt 33 bestimmt wurde, mehrere Maße berechnet. Aus dem Vergleich der Maße, die für den gleichen begrenzten Raum 7 und den gleichen Anforderungssatz jeweils für die neue und die bestehende Anordnung bestimmt werden, kann besonders aussagekräftig die Verwendbarkeit des neuen Basiselement bestimmt werden.

Beispielsweise wird als Maß der Schwerpunkt der jeweiligen Kabinenordnung bestimmt werden, so dass die Auswirkungen der Verwendung des neuen Basiselements auf den Schwerpunkt der Kabine ermittelt werden kann. Zusätzlich werden als Maße verschiedene KPIs bestimmt, mit denen die jeweiligen Anordnungen wirtschaftlich bewertet werden können. Auch so kann eine Aussage über die Verwendbarkeit eines neuen Basiselements getroffen werden.

## Patentansprüche

1. Verfahren zur Evaluierung einer Verwendbarkeit eines neuen Basiselements (25a) das für eine Verwendung in einer Mehrzahl von begrenzten Räumen (7a-7f) vorgesehen ist, bei dem
für jeden begrenzten Raum (7a-7f) der Mehrzahl von begrenzten Räumen (7a-7f) ein Satz von Anforderungen an den jeweiligen begrenzten Raum (7a-7f) definiert wird, wobei jeder Satz von Anforderungen für einen begrenzten Raum (7a-7f) der Mehrzahl von begrenzten Räumen (7a-7f) Stellflächenanforderungen, Elementanforderungen und Positionsanforderungen umfasst, wobei jede Stellflächenanforderung eine Position einer Stellfläche (15a-15i) der ein oder mehrere strukturelle Elemente (21, 21b, 23a, 23b, 25a, 25b) positioniert werden können, wobei jede Elementanforderung zumindest ein strukturelles Element (21, 21b, 23a, 23b, 25a, 25b) definiert, das in dem begrenzten Raum (7a-7f) angeordnet werden muss, und wobei jede Positionsanforderung eine Position zumindest eines strukturellen Elements (21, 21b, 23a, 23b, 25a, 25b) in dem begrenzten Raum (7a-7f) einschränkt,
in einer Elementdatenbank eine Vielzahl von bestehenden Basiselementen (21a, 21b, 23a, 23b, 25b) und das neue Basiselement (25a) gespeichert werden, wobei für jedes Basiselement (21, 21b, 23a, 23b, 25a, 25b) in der Elementdatenbank zumindest räumliche Abmessungen des Basiselements (21, 21b, 23a, 23b, 25a, 25b) hinterlegt sind,
jeder Satz von Anforderungen für einen begrenzten Raum (7a-7f) in logische Regeln umgesetzt wird,
für jeden begrenzten Raum (7a-7f) der Mehrzahl von begrenzten Räumen (7a-7f) eine neue Anordnung von strukturellen Elementen (21, 21b, 23a, 23b, 25a, 25b) automatisch bestimmt wird, in dem strukturelle Elemente (21, 21b, 23a, 23b, 25a, 25b) von einem auf einer Datenverarbeitungseinrichtung (3) ausgeführten Interpreter aus den in der Elementdatenbank gespeicherten Basiselementen (21, 21b, 23a, 23b, 25a, 25b) so ausgewählt und in dem jeweiligen begrenzten Raum (7a-7f) so angeordnet werden, dass der in logische Regeln umgesetzte Satz von Anforderungen an den jeweiligen begrenzten Raum (7a-7f) erfüllt wird, und
überprüft wird, ob das neue Basiselement (25a) von dem Interpreter ausgewählt und in einem oder mehreren der begrenzten Räume (7a-7f) der Mehrzahl von begrenzten Räumen (7a-7f) angeordnet wird.

2. Verfahren nach Anspruch 0, bei dem für jeden begrenzten Raum (7a-7f) der Mehrzahl von begrenzten Räumen (7a-7f) mittels der Datenverarbeitungseinrichtung (3) zumindest ein Maß für die jeweilige neue Anordnung von strukturellen Elementen (21, 21b, 23a, 23b, 25a, 25b) bestimmt wird, wobei das Maß dazu geeignet ist, um die erfolgte Auswahl und Anordnung der Mehrzahl von strukturellen Elementen (21, 21b, 23a, 23b, 25a, 25b) in dem jeweiligen begrenzten Raum (7a-7f) zu bewerten.

3. Verfahren nach Anspruch 2, bei dem
für jeden begrenzten Raum (7a-7f) der Mehrzahl von begrenzten Räumen (7a-7f) automatisch eine bestehende Anordnung bestimmt wird, in dem strukturelle Elemente (21, 21b, 23a, 23b, 25a, 25b) von einem auf einer Datenverarbeitungseinrichtung (3) ausgeführten Interpreter nur aus den in der Elementdatenbank gespeicherten bestehenden Basiselementen (21, 21b, 23a, 23b, 25a, 25b) so ausgewählt und in dem jeweiligen begrenzten Raum (7a-7f) so angeordnet werden, dass der in logische Regeln umgesetzte Satz von Anforderungen an den jeweiligen begrenzten Raum (7a-7f) erfüllt wird,
für jeden begrenzten Raum (7a-7f) der Mehrzahl von begrenzten Räumen (7a-7f) mittels der Datenverarbeitungseinrichtung (3) zumindest ein Maß für die jeweilige bestehende Anordnung von strukturellen Elementen (21, 21b, 23a, 23b, 25a, 25b) bestimmt wird, wobei für die bestehende Anordnung jeden begrenzten Raumes (7a-7f) das gleiche zumindest eine Maß bestimmt wird, das für die neue Anordnung des bestehenden Raumes (7a-7f) bestimmt wird, und
aus der Veränderung des Maßes von der bestehenden Anordnung zur neuen Anordnung auf die Verwendbarkeit des neuen Basiselements (25a) geschlossen werden kann.

4. Verfahren nach Anspruch 2 oder 3, wobei das zumindest eine Maß einen Schwerpunkt des begrenzten Raums (7a-7f) und/oder eine Leistungskennzahl umfasst.

5. Verfahren nach einem der vorhergehenden Ansprüche, wobei die Mehrzahl von begrenzten Räumen (7a-7f) eine erste Gruppe (9a) von begrenzten Räumen (7a-7c) umfasst, wobei jeder begrenzte Raum (7a-7c) der ersten Gruppe (9a) identische äußere Abmessungen aufweist, innerhalb derer die Stellflächen (15a-15i) definiert sind, und
wobei jeder Satz von Anforderungen an einen begrenzten Raum (7a-7c) der ersten Gruppe (9a) sich in zumindest einer Anforderung von allen anderen Sätzen von Anforderungen an einen begrenzten Raum (7a-7c) der ersten Gruppe (9a) unterscheidet.

6. Verfahren nach Anspruch 5, wobei die Mehrzahl von begrenzten Räumen (7a-7f) eine zweite Gruppe (9b) von begrenzten Räumen (7d-7f) umfasst, wobei jeder begrenzte Raum (7d-7f) der zweiten Gruppe (9b) identische äußere Abmessungen aufweist, innerhalb derer die Stellflächen (15a-15i) definiert sind,
wobei sich die äußeren Abmessungen der begrenzten Räume (7a-7c) der ersten Gruppe (9a) von den äußeren Abmessungen der begrenzten Räume (7d-7f) der zweiten Gruppe (9b) unterscheiden, und
wobei jeder Satz von Anforderungen an einen begrenzten Raum (7d-7f) der zweiten Gruppe (9b) sich in zumindest einer Anforderung von allen anderen Sätzen von Anforderungen an einen begrenzten Raum (7d-7f) der zweiten Gruppe (9b) unterscheidet.

7. Verfahren nach einem der vorhergehenden Ansprüche, wobei die Stellflächen (15a-15i) innerhalb von äußeren Abmessungen des begrenzten Raums (7a-7f) liegen und durch eine oder mehrere Sperrflächen (17a-17e) eingeschränkt werden, auf denen keine strukturellen Elemente (21, 21b, 23a, 23b, 25a, 25b) positioniert werden dürfen.

8. Verfahren nach einem der vorhergehenden Ansprüche, wobei das Definieren der Stellflächenanforderungen ein Ermitteln von Abmessungen des jeweiligen begrenzten Raumes (7a-7f) umfasst.

9. Verfahren nach einem der vorhergehenden Ansprüche, wobei zumindest ein Satz von Anforderungen an einen begrenzten Raum (7a-7f) weiterhin Betriebsanforderungen umfasst, wobei jede Betriebsanforderung den Betrieb zumindest eines strukturellen Elements (21, 21b, 23a, 23b, 25a, 25b) vorgibt.

10. Verfahren nach einem der vorhergehenden Ansprüche, wobei zumindest ein Satz von Anforderungen an einen begrenzten Raum (7a-7f) Personalanforderungen und Tätigkeitsanforderungen umfasst, wobei jede Personalanforderung die Anwesenheit zumindest einer Person in dem begrenzten Raum (7a-7f) definiert und Abmessungen vorgibt, die die zumindest eine Person in dem begrenzten Raum (7a-7f) einnimmt, und wobei jede Tätigkeitsanforderung die Tätigkeit zumindest einer in dem begrenzten Raum anwesenden Person in Bezug auf zumindest ein strukturelles Element (21, 21b, 23a, 23b, 25a, 25b) definiert.

11. Verfahren nach einem der vorhergehenden Ansprüche, wobei die begrenzten Räume Fahrzeugkabinen (35), vorzugsweise Kabinen eines Passagierflugzeugs, sind.

12. Verfahren nach Anspruch 2 und 11, wobei jeder Satz von Anforderungen Elementanforderungen umfasst, die zumindest eine erste Anzahl von Passagiersitzplätzen in der Fahrzeugkabine (35) sowie eine zweite Anzahl von Kabinenpersonalsitzplätzen definieren, und
wobei das zumindest eine Maß, das für die neue Anordnung von strukturellen Elementen (21, 21b, 23a, 23b, 25a, 25b) in jedem begrenzten Raum (7a-7f) der Mehrzahl von begrenzten Räumen (7a-7f) mittels der Datenverarbeitungseinrichtung (3) bestimmt wird, ein Anteil der Passagiersitzplätze ist, die in einem Sichtfeld von Kabinenpersonalsitzplätzen liegen.

13. System (1) zur automatisierten Evaluierung einer Verwendbarkeit eines neuen Basiselements (25a), das für eine Verwendung in einer Mehrzahl von begrenzten Räumen (7a-7f) vorgesehen ist, wobei das System (1) eine Datenverarbeitungseinrichtung (3) und einen Datenspeicher (5) umfasst,
wobei das System (1) dazu eingerichtet ist, ein Verfahren nach einem der Ansprüche 1 bis 12 auszuführen, wobei die Elementdatenbank in dem Datenspeicher (5) gespeichert ist.
